# EUROPÄISCHE PATENTANMELDUNG

(11) **EP 4 000 365 A1**
(43) Veröffentlichungstag der Anmeldung: **25.05.2022**
(21) Anmeldenummer: 21401044.9
(22) Anmeldetag: 01.11.2021
(51) Int. Cl.: A01C 7/08

(54) **VERTEILVORRICHTUNG FÜR KÖRNIGES MATERIAL**

(30) Priorität: 11.11.2020 DE 102020129735
(71) Anmelder: Amazonen-Werke H. Dreyer SE & Co. KG, 49205 Hasbergen (DE)
(72) Erfinder: Flucke, Jan, 27798 Hude (DE); Wien, Thomas, 28816 Stuhr (DE)

(57) **Zusammenfassung**

Die Erfindung betrifft eine Verteilvorrichtung (10) für körniges Material, insbesondere Saatgut und/oder Dünger, mit einem Verteilerkopf (14), welcher dazu eingerichtet ist, eine dem Verteilerkopf (14) über eine Hauptförderleitung (12) zugeleitete Förderluft-Material-Hauptströmung (FMH) in mehrere Förderluft-Material-Einzelströmungen (FME) aufzuteilen, und zumindest einer schaltbaren Rückführeinrichtung (16a-16e), welche dazu eingerichtet ist, in einem ersten Schaltzustand eine in die Rückführeinrichtung (16a-16e) einströmende Förderluft-Material-Einzelströmung (FME) in eine Ausbringleitung (26) einzuleiten und in einem zweiten Schaltzustand das körnige Material und zumindest einen Anteil der Förderluft einer in die Rückführeinrichtung (16a-16e) einströmenden Förderluft-Material-Einzelströmung (FME) in eine mit der Hauptförderleitung (12) verbundene Rückführleitung (36) einzuleiten.

## Beschreibung

Die Erfindung betrifft eine Verteilvorrichtung für körniges Material nach dem Oberbegriff des Patentanspruchs 1 und ein Verfahren zum Verteilen von körnigem Material nach dem Oberbegriff des Patentanspruchs 14.

Zum Verteilen von körnigem Material, wie beispielsweise Saatgut oder Dünger, auf mehrere mit Ablageeinrichtungen verbundene Ausbringleitungen werden in modernen Ausbringmaschinen Verteilvorrichtungen eingesetzt, bei welchen die Einleitung des Materials in einzelne Ausbringleitungen unterbrochen werden kann, um auf diese Weise die Materialablage in einzelnen Reihen temporär unterbrechen zu können. Durch die Möglichkeit, die Materialablage in einzelnen Reihen temporär unterbrechen zu können, können beispielsweise Fahrgassen angelegt oder eine an die Feldgeometrie angepasste Materialablage realisiert werden. Ferner ist denkbar die Einleitung von Material in einzelne Ausbringleitungen dauerhaft zu unterbrechen, um beispielsweise die Verteilvorrichtung für eine verringerte Anzahl abgehender Ausbringleitungen zu verwenden.

Bei bekannten Verteilvorrichtungen werden bereits Rückführsysteme eingesetzt, durch welche in Richtung einer Ausbringleitung strömendes körniges Material vor Einleitung in die Ausbringleitung wieder zurück in eine Hauptförderleitung, beispielsweise ein Steigrohr, zurückgeführt werden kann. In einigen Systemen werden Rückführeinrichtungen mit Bypassleitungen benutzt, um Luft aus einer sich in der Rückführung befindlichen Luft-Material-Strömung abzuzweigen, sodass ein übermäßiger Lufteintrag in die Hauptförderleitung vermieden wird. Ein übermäßiger Eintrag von zurückgeführter Luft in die Hauptförderleitung kann zu einer Beeinträchtigung der Förderströmung in der Hauptförderleitung führen. Derartige Bypass-Systeme sind beispielsweise aus WO 2017/055266 A1 und EP 3 372 065 B1 bekannt.

Bekannte Verteilvorrichtungen weisen üblicherweise eine Rückführeinrichtung auf, welche in zumindest zwei Schaltzustände verbracht werden kann. In einem ersten Schaltzustand wird eine in die Rückführeinrichtung einströmende Förderluft-Material-Einzelströmung in eine Ausbringleitung eingeleitet, wobei in einem zweiten Schaltzustand das körnige Material und zumindest ein Anteil der Förderluft einer in die Rückführeinrichtung einströmenden Förderluft-Material-Einzelströmung in eine mit der Hauptförderleitung verbundene Rückführleitung eingeleitet wird. Dadurch, dass im zweiten Schaltzustand der Rückführeinrichtung das körnige Material in eine mit der Hauptförderleitung verbundene Rückführleitung eingeleitet wird, wird der Ausbringleitung kein neues körniges Material zugeführt und somit eine Unterbrechung der Materialablage veranlasst. Die Unterbrechung der Materialablage erfolgt verzögert, da das sich zum Schaltzeitpunkt noch in der Ausbringleitung befindende Material noch auf der landwirtschaftlichen Nutzfläche abzulegen ist. Dadurch, dass im zweiten Schaltzustand der Rückführeinrichtung zumindest ein Anteil der Förderluft in eine mit der Hauptförderleitung verbundene Rückführleitung eingeleitet wird, wird die Einleitung von Förderluft in die Ausbringleitung verringert oder gänzlich verhindert. Durch die verringerte oder verhinderte Einleitung von Förderluft wird der Transport des sich zum Schaltzeitpunkt noch in der Ausbringleitung befindlichen Materials beeinträchtigt, sodass das Material unter Schwerkrafteinwirkung unkontrolliert durch die Ausbringleitung fällt und der Abschaltzeitpunkt mangels einer ausreichenden Materialförderung in der Ausbringleitung verschleppt wird.

Die der Erfindung zugrundeliegende Aufgabe besteht somit darin, das körnige Material, welches sich bei Unterbrechung einer weiteren Materialeinleitung in die Ausbringleitung noch in der Ausbringleitung befindet, kontrolliert zur Ablageeinrichtung zu fördern, sodass ein Verschleppen des Abschaltzeitpunkts vermieden wird.

Die Aufgabe wird gelöst durch eine Verteilvorrichtung der eingangs genannten Art, wobei die erfindungsgemäße Verteilvorrichtung eine Druckluftversorgungseinrichtung aufweist, mittels welcher, vorzugsweise im zweiten Schaltzustand der Rückführeinrichtung, Druckluft alternativ oder zusätzlich zu der Förderluft einer in die Rückführeinrichtung einströmenden Förderluft-Material-Einzelströmung in die Ausbringleitung einleitbar ist.

Mittels der Druckluft kann die verringerte oder verhinderte Einleitung von Förderluft in die Ausbringleitung kompensiert werden, sodass es nicht zur Beeinträchtigung des Materialtransports durch eine zu geringe Förderluftströmung kommt. Das Verschleppen des Abschaltzeitpunkts wird auf diese Weise effektiv vermieden.

Mittels der Verteilvorrichtung kann die Zuleitung von körnigem Material, beispielsweise von Saatgut und/oder Dünger, zu einer Ablageeinrichtung, beispielsweise einem Säschar oder einem Düngerschar, unterbrochen werden. Durch die Unterbrechung der Saatgutzuleitung kann beispielsweise die Saatgutablage reihenspezifisch unterbrochen werden. Durch die reihenspezifische Unterbrechung der Saatgutablage können Fahrgassen angelegt werden. Ferner erlaubt die reihenspezifische Unterbrechung der Saatgutzuleitung die präzise Saatgutablage auch bei komplexen, beispielsweise zulaufenden, Feldgeometrien.

Über die Druckluftversorgungseinrichtung kann alternativ oder zusätzlich auch in einem anderen Schaltzustand der Rückführeinrichtung, beispielsweise in dem ersten Schaltzustand der Rückführeinrichtung, Druckluft in die Ausbringleitung einleitbar sein.

In einer bevorzugten Ausführungsform der erfindungsgemäßen Verteilvorrichtung weist die Rückführeinrichtung einen Lufteinleitraum auf, welcher, insbesondere in dem zweiten Schaltzustand, pneumatisch mit der Ausbringleitung verbunden ist, wobei die Druckluftversorgungseinrichtung an den Lufteinleitraum der Rückführeinrichtung angeschlossen ist. Der Lufteinleitraum kann eine Luftkammer sein. Die Druckluft wird über den Lufteinleitraum der Rückführeinrichtung in die Ausbringleitung eingeleitet. Die Rückführeinrichtung weist vorzugsweise ein Gehäuse auf. Der Lufteinleitraum befindet sich vorzugsweise in dem Gehäuse der Rückführeinrichtung. Der Lufteinleitraum kann Bestandteil einer pneumatischen Verbindung zwischen einem Bereich erhöhten Drucks und der Ausbringleitung sein, sodass die Druckluftversorgungseinrichtung über den Bereich erhöhten Drucks und die daran anschließende pneumatische Verbindung mit dem Lufteinleitraum verbunden ist.

In einer anderen vorteilhaften Ausführungsform der erfindungsgemäßen Verteilvorrichtung ist die pneumatische Verbindung zwischen dem Lufteinleitraum und der Ausbringleitung in dem ersten Schaltzustand der Rückführeinrichtung gesperrt. Wenn die pneumatische Verbindung zwischen dem Lufteinleitraum und der Ausbringleitung gesperrt ist, baut sich in dem Lufteinleitraum ein Luftdruck auf, wobei die von der Druckluftversorgungseinrichtung bereitgestellte Druckluft nicht in die Ausbringleitung eingeleitet wird. Die Materialausbringung wird in diesem Fall nicht durch einen zusätzlichen Lufteintrag aus dem Lufteinleitraum in die Ausbringleitung beeinflusst. Die pneumatische Verbindung zwischen dem Lufteinleitraum und der Ausbringleitung ist in dem zweiten Schaltzustand der Rückführeinrichtung freigegeben. Wenn die pneumatische Verbindung zwischen dem Lufteinleitraum und der Ausbringleitung durch Schalten der Rückführeinrichtung freigegeben wird, gelangt die Druckluft aus dem Lufteinleitraum in die Ausbringleitung und kann das dort befindliche Material durch die Ausbringleitung fördern. Bei Einleitung der Druckluft aus dem Lufteinleitraum in die Ausbringleitung stellt sich vorzugsweise eine Strömungsgeschwindigkeit in der Ausbringleitung ein, welche der Strömungsgeschwindigkeit der Luft-Material-Einzelströmung entspricht, wenn diese im ersten Schaltzustand in die Ausbringleitung eingeleitet wird. Somit ergibt sich unabhängig vom Schaltzustand der Rückführeinrichtung in der Ausbringleitung also eine gleichbleibende Strömungsgeschwindigkeit, sodass das Abschaltverhalten vorhersehbar ist und entsprechend eingeregelt werden kann. Die Druckluftversorgungseinrichtung muss dadurch, dass die pneumatische Verbindung zwischen dem Lufteinleitraum und der Ausbringleitung sperrbar und freigebbar ist, nicht deaktiviert werden, um die Einleitung von Druckluft in die Ausbringleitung zu verhindern. Ferner muss die Druckluftversorgungseinrichtung nicht aktiviert werden, um die Einleitung von Druckluft in die Ausbringleitung zu veranlassen.

Die erfindungsgemäße Verteilvorrichtung wird ferner dadurch vorteilhaft weitergebildet, dass die Rückführeinrichtung zumindest einen beweglichen Sperrkörper aufweist, welcher durch Schalten der Rückführeinrichtung in eine Ausbringstellung und eine Rückführstellung verbringbar ist. Der zumindest eine Sperrkörper befindet sich in dem ersten Schaltzustand der Rückführeinrichtung vorzugsweise in der Ausbringstellung. In dem zweiten Schaltzustand der Rückführeinrichtung befindet sich der zumindest eine Sperrkörper vorzugsweise in der Rückführstellung. Die Rückführeinrichtung kann auch mehrere Sperrkörper aufweisen. Der Sperrkörper kann als drehbare Wippe mit einem ersten und einem zweiten Wippenarm ausgebildet sein. Der Sperrkörper kann auch als Fahrgassenklappe bezeichnet werden, da diese die Unterbrechung des Saatgutstroms zu einem Säschar zur Anlage einer Fahrgasse ermöglicht. Der Sperrkörper kann zwischen der Ausbringstellung und der Rückführstellung auch in eine Zwischenstellung verbringbar sein, um beispielsweise die Querverteilung zu verbessern.

In einer anderen bevorzugten Ausführungsform der erfindungsgemäßen Verteilvorrichtung ist der Sperrkörper dazu eingerichtet, in der Ausbringstellung die pneumatische Verbindung zwischen dem Lufteinleitraum und der Ausbringleitung zu sperren. Alternativ oder zusätzlich ist der Sperrkörper dazu eingerichtet, in der Rückführstellung die pneumatische Verbindung zwischen dem Lufteinleitraum und der Ausbringleitung freizugeben. Wenn der Sperrkörper als drehbare Wippe mit zwei Wippenarmen ausgebildet ist, wird die pneumatische Verbindung zwischen dem Lufteinleitraum und der Ausbringleitung in der Ausbringstellung des Sperrkörpers von einem Wippenarm gesperrt.

In einer anderen bevorzugten Ausführungsform der erfindungsgemäßen Verteilvorrichtung weist die Rückführeinrichtung einen Ausbringdurchgang zwischen einer mit dem Verteilerkopf verbundenen Einlassöffnung der Rückführeinrichtung und einer mit der Ausbringleitung verbundenen Ausbringöffnung der Rückführeinrichtung auf. Der zumindest eine Sperrkörper ist vorzugsweise dazu eingerichtet, in der Ausbringstellung den Ausbringdurchgang freizugeben. Alternativ oder zusätzlich ist der zumindest eine Sperrkörper dazu eingerichtet, in der Rückführstellung den Ausbringdurchgang zu sperren. Der Ausbringdurchgang wird in der Rückführstellung des Sperrkörpers vorzugsweise von einem Wippenarm gesperrt. Wenn die Rückführeinrichtung mehrere, beispielsweise zwei, Sperrkörper aufweist, kann einer der Sperrkörper dazu eingerichtet sein, den Ausbringdurchgang zwischen der Einlassöffnung und der Ausbringöffnung zu sperren und freizugeben.

In einer Weiterbildung der erfindungsgemäßen Verteilvorrichtung weist die Rückführeinrichtung einen Rückführdurchgang zwischen einer mit dem Verteilerkopf verbundenen Einlassöffnung der Rückführeinrichtung und einer mit der Rückführleitung verbundenen Rückführöffnung der Rückführeinrichtung auf. Der Sperrkörper ist vorzugsweise dazu eingerichtet, in der Ausbringstellung den Rückführdurchgang zu sperren. Alternativ oder zusätzlich ist der Sperrkörper dazu eingerichtet, in der Rückführstellung den Rückführdurchgang freizugeben. In der Ausbringstellung des Sperrkörpers wird der Rückführdurchgang vorzugsweise von einem Wippenarm gesperrt. Wenn die Rückführeinrichtung mehrere Sperrkörper aufweist, kann einer der Sperrkörper dazu eingerichtet sein, den Rückführdurchgang zwischen der Einlassöffnung und der Rückführöffnung zu sperren und freizugeben.

Es ist darüber hinaus eine erfindungsgemäße Verteilvorrichtung bevorzugt, welche mehrere schaltbare Rückführeinrichtungen aufweist. Die mehreren schaltbaren Rückführeinrichtungen sind jeweils mit einer Ausbringleitung und einer Rückführleitung verbunden. Mittels der Druckluftversorgungseinrichtung ist, vorzugsweise im zweiten Schaltzustand der jeweiligen Rückführeinrichtungen, Druckluft alternativ oder zusätzlich zu der Förderluft der in den jeweiligen Rückführeinrichtungen einströmenden Förderluft-Material-Einzelströmungen in die jeweiligen Ausbringleitungen einleitbar. Mittels der Druckluftversorgungseinrichtung lässt sich somit der Materialtransport in sämtlichen Ausbringleitungen gewährleisten, auch, wenn in die jeweilige Ausbringleitung kein neues körniges Material eingeleitet wird.

In einer weiteren bevorzugten Ausführungsform der erfindungsgemäßen Verteilvorrichtung ist die Druckluftversorgungseinrichtung dazu eingerichtet, in die verschiedenen Ausbringleitungen unterschiedliche Druckluftmengen und/oder Druckluft mit einem unterschiedlichen Druck einzuleiten. Somit kann die Druckluftunterstützung reihenspezifisch oder segmentspezifisch angepasst werden, um die Querverteilung zu optimieren. Dies erlaubt beispielsweise die Kompensation von Staudrücken durch zusätzliche Luft. In den verschiedenen Ausbringleitungen können aufgrund unterschiedlicher Schlauchlängen voneinander abweichende Staudrücke vorliegen, sodass die Einleitung von unterschiedlichen Druckluftmengen und/oder die Einleitung von Druckluft mit einem unterschiedlichen Druck zu einer Vergleichmäßigung der Transportgeschwindigkeit des körnigen Materials innerhalb der jeweiligen Ausbringleitungen führt.

Es ist darüber hinaus eine erfindungsgemäße Verteilvorrichtungen vorteilhaft, bei welcher Lufteinleiträume mehrerer Rückführeinrichtungen pneumatisch miteinander verbunden sind. Die mehreren Lufteinleiträume können beispielsweise nach Art einer Reihenschaltung pneumatisch miteinander verbunden sein. Die Luftzuführung wird auf diese Weise erheblich vereinfacht, sodass sich eine verringerte Baugruppenkomplexität ergibt.

In einer weiteren bevorzugten Ausführungsform der erfindungsgemäßen Verteilvorrichtung weist die Druckluftversorgungseinrichtung eine Druckluftverteilkammer auf, an welche Lufteinleiträume mehrerer Rückführeinrichtungen angeschlossen sind. Die Druckluftverteilkammer kann beispielsweise eine Ringkammer sein. Die Ringkammer kann an dem Verteilerkopf und/oder unterhalb oder oberhalb des Verteilerkopfes angeordnet sein.

In einer Weiterbildung weist die erfindungsgemäße Verteilvorrichtung ein Gebläse zum Erzeugen einer Luftströmung auf. Das Gebläse ist vorzugsweise mit einem Strömungsteiler verbunden, welcher mit der Hauptförderleitung und der Druckluftversorgungseinrichtung verbunden und dazu eingerichtet ist, die erzeugte Luftströmung in eine Förderluft-Strömung und eine Druckluft-Strömung aufzuteilen. Der Strömungsteiler kann beispielsweise ein Y-Stück sein. Um überschüssige Luft vor der Zurückleitung in die Hauptförderleitung abzuleiten und somit eine negative Beeinflussung der Strömung in der Hauptförderleitung zu verhindern, ist vorzugsweise eine Entlüftung im Rückführbereich kurz vor der Hauptförderleitung vorgesehen. Die überschüssige Luft kann durch Schlauchleitungen an geeigneter Stelle ausströmen. Alternativ kann die Druckluft-Strömung durch ein separates Gebläse bereitgestellt werden. Das Gebläse kann im Nahbereich des Verteilerkopfes angeordnet sein.

In einer weiteren bevorzugten Ausführungsform weist die erfindungsgemäße Verteilvorrichtung einen an der Hauptförderleitung angeordneten Strömungsabzweiger auf, welcher mit der Druckluftversorgungseinrichtung verbunden und dazu eingerichtet ist, die Druckluft aus der Förderluft-Material-Strömung abzuzweigen. Der Strömungsabzweiger ist vorzugsweise in einem Bereich erhöhten Drucks an der Hauptförderleitung angeordnet. Beispielsweise weist die Hauptförderleitung eine als Düse fungierende Leitungsverengung auf, wobei der Strömungserzeuger in Strömungsrichtung, insbesondere unmittelbar, hinter der Leitungsverengung angeordnet sein kann. In diesem Fall ist keine Entlüftung notwendig, da keine zusätzliche Luft zugeführt, sondern Luft an geeigneter Stelle entzogen und zur Beschleunigung in den geschalteten Ausbringleitungen verwendet werden kann. Die Düse wird von dem Luft-MaterialGemisch durchströmt, sodass es zu einer Beschleunigung kommt. In dem Beschleunigungsbereich ist dann der Strömungsabzweiger angeordnet. Alternativ oder zusätzlich kann der Strömungsabzweiger oder ein weiterer Strömungsabzweiger in dem Verteilerkopf, insbesondere in einem den Verteilerkopf begrenzenden Deckel, angeordnet sein.

In einer weiteren bevorzugten Ausführungsform weist die erfindungsgemäße Verteilvorrichtung ein luftdurchlässiges Element auf, welches mit der Druckluftversorgungseinrichtung verbunden und dazu eingerichtet ist, die Druckluft aus der Förderluft-Material-Hauptströmung und/oder zumindest einer Förderluft-Material-Einzelströmung abzuzweigen. Das luftdurchlässige Element ist so beschaffen, dass Luft durch es hindurchtreten kann während es in der Förderluft transportiertes Material zurückhält. Das luftdurchlässige Element kann beispielsweise siebartig ausgeführt sein. Alternativ oder zusätzlich kann das luftdurchlässige Element derart in der Förderluft-Material-Hauptströmung und/oder einer Förderluft-Material-Einzelströmung angeordnet sein, dass in der Förderluft transportiertes Material, insbesondere aufgrund seiner kinetischen Energie, über das luftdurchlässige Element hinweg transportiert wird, während die Druckluft abgezweigt wird. Das luftdurchlässige Element kann mithin als Störkontur ausgeführt sein. Vorzugsweise ist das luftdurchlässige Element an einem Übergang zwischen dem Verteilerkopf und einer Druckluftverteilkammer angeordnet.

Die der Erfindung zugrundeliegende Aufgabe wird ferner durch ein Verfahren der eingangs genannten Art gelöst, wobei im Rahmen des erfindungsgemäßen Verfahrens Druckluft alternativ oder zusätzlich zu der Förderluft der in die Rückführeinrichtung einströmenden Förderluft-Material-Einzelströmung mittels einer Druckluftversorgungseinrichtung in die Ausbringleitung eingeleitet wird. Das Einleiten der Druckluft in die Ausbringleitung erfolgt vorzugsweise während sich die Rückführeinrichtung im zweiten Schaltzustand befindet. Alternativ kann sich die Rückführeinrichtung auch in einem anderen, beispielsweise in dem ersten Schaltzustand, befinden. Das Verfahren wird vorzugsweise mit einer Verteilvorrichtung nach einer der vorstehend beschriebenen Ausführungsformen ausgeführt, sodass hinsichtlich der Vorteile und Modifikationen des erfindungsgemäßen Verfahrens zunächst auf die Vorteile und Modifikationen der erfindungsgemäßen Verteilvorrichtung verwiesen wird.

Das Verfahren wird ferner dadurch vorteilhaft weitergebildet, dass zum Einleiten der Druckluft in die Ausbringleitung die Druckluft einem Lufteinleitraum der Rückführeinrichtung zugeleitet wird, welche, insbesondere in dem zweiten Schaltzustand, pneumatisch mit der Ausbringleitung verbunden ist. Es ist darüber hinaus ein erfindungsgemäßes Verfahren bevorzugt, bei welchem die pneumatische Verbindung zwischen dem Lufteinleitraum und der Ausbringleitung durch Schalten der Rückführeinrichtung in den ersten Schaltzustand gesperrt wird. Alternativ oder zusätzlich wird die pneumatische Verbindung zwischen den Lufteinleitraum und der Ausbringleitung durch Schalten der Rückführeinrichtung in den zweiten Schaltzustand freigegeben.

In einer alternativen Ausführungsform des erfindungsgemäßen Verfahrens erfolgt das Sperren und/oder Freigeben durch Bewegen eines beweglichen Sperrkörpers der Rückführeinrichtung. Der Sperrkörper wird vorzugsweise durch Schalten der Rückführeinrichtung in den ersten Schaltzustand in eine Ausbringstellung und durch Schalten der Rückführeinrichtung in einen zweiten Schaltzustand in eine Rückführstellung bewegt. In der Ausbringstellung ist die pneumatische Verbindung zwischen dem Lufteinleitraum und der Ausbringleitung gesperrt. In der Rückführstellung ist die pneumatische Verbindung zwischen dem Lufteinleitraum und der Ausbringleitung freigegeben. Die Rückführeinrichtung weist vorzugsweise einen Ausbringdurchgang zwischen einer mit dem Verteilerkopf verbundenen Einlassöffnung und einer mit der Ausbringleitung verbundenen Ausbringöffnung der Rückführeinrichtung auf. In der Ausbringstellung ist der Ausbringdurchgang freigegeben. In der Rückführstellung ist der Ausbringdurchgang gesperrt. Die Rückführeinrichtung weist vorzugsweise einen Rückführdurchgang zwischen einer mit dem Verteilerkopf verbundenen Einlassöffnung der Rückführeinrichtung und einer mit der Rückführleitung verbundenen Rückführöffnung der Rückführeinrichtung auf. In der Ausbringstellung ist der Rückführdurchgang gesperrt. In der Rückführstellung ist der Rückführdurchgang freigegeben.

Nachfolgend werden bevorzugte Ausführungsformen der Erfindung unter Bezugnahme auf die beiliegenden Zeichnungen näher erläutert und beschrieben. Dabei zeigen:
- Fig. 1: ein Ausführungsbeispiel der erfindungsgemäßen Verteilvorrichtung in einer Schnittdarstellung, wobei sich die Rückführeinrichtung in einem ersten Schaltzustand befindet;
- Fig. 2: die in der Fig. 1 abgebildete Verteilvorrichtung in einer Schnittdarstellung, wobei sich die Rückführeinrichtung in einem zweiten Schaltzustand befindet; und
- Fig. 3: ein weiteres Ausführungsbeispiel der erfindungsgemäßen Verteilvorrichtung in einer Schnittdarstellung, wobei sich die Rückführeinrichtung in einem zweiten Schaltzustand befindet.

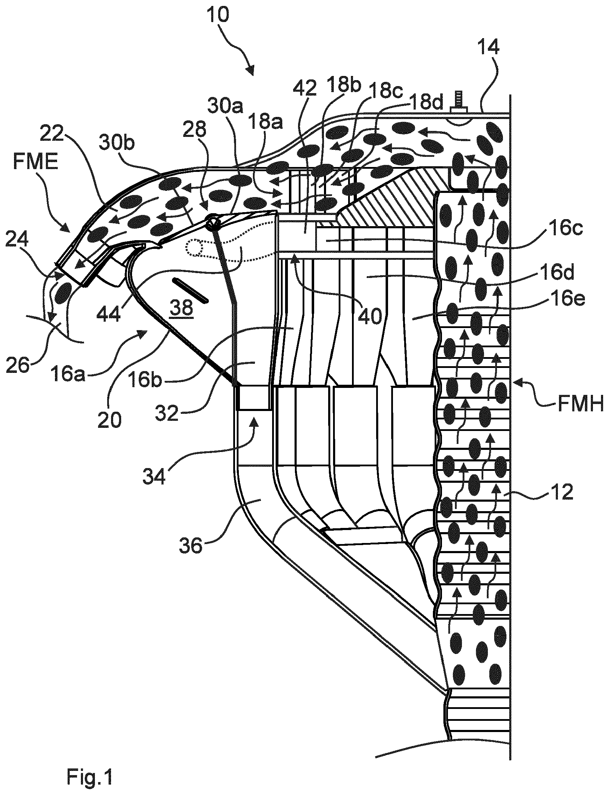

Die Fig. 1 zeigt eine Verteilvorrichtung 10 für körniges Material. Das körnige Material kann beispielsweise Saatgut oder Dünger sein. Die Verteilvorrichtung 10 weist eine als Wellrohr ausgebildete Hauptförderleitung 12 auf, über welche einem Verteilerkopf 14 eine Förderluft-Material-Hauptströmung FMH zugeleitet wird. In dem Verteilerkopf 14 wird die Förderluft-Material-Hauptströmung FMH in mehrere Förderluft-Material-Einzelströmungen FME aufgeteilt. Die Förderluft-Material-Einzelströmungen FME werden über Einlassöffnungen 18a-18d in Rückführeinrichtungen 16a-16e eingeleitet, wobei die Rückführeinrichtungen 16a-16e rund um den Verteilerkopf 14 angeordnet sind.

In dem Gehäuse 20 der Rückführeinrichtung 16a befindet sich ein Ausbringdurchgang 22, welcher die Einlassöffnung 18a mit einer Ausbringöffnung 24 verbindet. An die Ausbringöffnung 24 schließt sich eine Ausbringleitung 26 an, über welche das körnige Material einer Ablageeinrichtung, beispielsweise einem Säschar oder einem Düngerschar, zugeleitet wird. Über die Ablageeinrichtung kann das körnige Material dann auf der landwirtschaftlichen Nutzfläche abgelegt werden.

Die Rückführeinrichtung 16a kann in einen ersten Schaltzustand und einen zweiten Schaltzustand verbracht werden, wobei sich die Rückführeinrichtung in der Fig. 1 in dem ersten Schaltzustand befindet. In dem ersten Schaltzustand wird die in die Rückführeinrichtung 16a einströmende Förderluft-Material-Einzelströmung FME in die Ausbringleitung 26 eingeleitet. Hierzu befindet sich ein beweglicher Sperrkörper 28, welcher innerhalb des Gehäuses 20 der Rückführeinrichtung 16a angeordnet ist, in einer Ausbringstellung. In dem ersten Schaltzustand der Rückführeinrichtung 16a befindet sich der Sperrkörper 28 also in der Ausbringstellung. Der Sperrkörper 28 ist eine drehbare Wippe mit einem ersten Wippenarm 30a und einem zweiten Wippenarm 30b. In der Ausbringstellung sperrt der erste Wippenarm 30a einen Rückführdurchgang 32 innerhalb des Gehäuses 20 der Rückführeinrichtung 16a. Der Rückführdurchgang 32 verbindet die Einlassöffnung 18a der Rückführeinrichtung 16a mit einer Rückführöffnung 34 der Rückführeinrichtung 16a. An die Rückführöffnung 34 schließt sich eine Rückführleitung 36 an, über welche eine in den Rückführdurchgang 32 eingeleitete Förderluft-Material-Einzelströmung FME zurück in die Hauptförderleitung 12 geleitet werden kann.

Ferner sperrt der zweite Wippenarm 30b in der Ausbringstellung des Sperrkörpers 28 eine pneumatische Verbindung zwischen einem Lufteinleitraum 38 in dem Gehäuse 20 der Rückführeinrichtung 16a und der Ausbringleitung 26. Der Lufteinleitraum 38 ist mit einer Druckluftversorgungseinrichtung 40 verbunden. Über die Druckluftversorgungsleitung 44 der Druckluftversorgungseinrichtung 40 kann Druckluft DL in den Lufteinleitraum 38 eingeleitet werden. Die pneumatische Verbindung zwischen dem Lufteinleitraum 38 und der Ausbringleitung 26 ist in dem ersten Schaltzustand der Rückführeinrichtung 16a jedoch gesperrt, sodass keine Drucklufteinleitung aus dem Lufteinleitraum 38 in die Ausbringleitung 26 erfolgt.

Die Druckluftversorgungseinrichtung 40 weist eine als Ringkammer ausgebildete Druckluftverteilkammer 42 auf, an welche Lufteinleiträume 38 mehrerer Rückführeinrichtungen 16a-16e angeschlossen sind. Somit sind die Lufteinleiträume 38 mehrerer Rückführeinrichtungen 16a-16e pneumatisch miteinander verbunden.

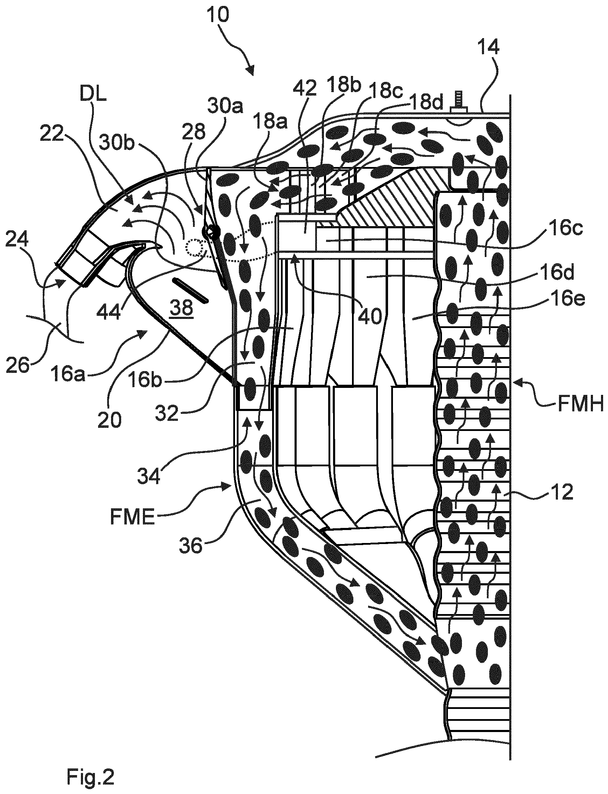

Bei dem in der Fig. 2 dargestellten Zustand befindet sich die Rückführeinrichtung 16a im zweiten Schaltzustand. In dem zweiten Schaltzustand befindet sich der bewegliche Sperrkörper 28 in einer Rückführstellung. In der Rückführstellung sperrt der erste Wippenarm 30a des Sperrkörpers 28 den Ausbringdurchgang 22, wobei der Rückführdurchgang 32 freigegeben ist. Aufgrund des freigegebenen Rückführdurchgangs 32 wird die Förderluft-Material-Einzelströmung FME in den Rückführdurchgang 32 eingeleitet und von dort aus über die Rückführleitung 36 wieder der Hauptförderleitung 12 zugeführt.

In dem dargestellten zweiten Schaltzustand der Rückführeinrichtung 16a wird der Ausbringleitung 26 kein neues körniges Material zugeführt und somit eine Unterbrechung der Materialabgabe veranlasst. Die Unterbrechung der Materialabgabe erfolgt jedoch verzögert, da das sich zum Schaltzeitpunkt noch in der Ausbringleitung 26 befindliche Material noch abgelegt werden muss. Dadurch, dass im zweiten Schaltzustand der Rückführeinrichtung 16a die gesamte Förderluft der Förderluft-Material-Einzelströmung FME in die Rückführleitung 36 eingeleitet wird, erfolgt keine Einleitung von Förderluft in die Ausbringleitung 26. Hierdurch wird der Transport des zum Schaltzeitpunkt noch in der Ausbringleitung 26 befindlichen Materials beeinträchtigt, sodass das Material in der Ausbringleitung 26 unter Schwerkrafteinwirkung unkontrolliert durch die Ausbringleitung 26 fallen würde, wenn keine zusätzliche Luft in die Ausbringleitung 26 eingeleitet werden würde.

In dem zweiten Schaltzustand der Rückführeinrichtung 16a wird jedoch über die Druckluftversorgungseinrichtung 40 Druckluft DL in die Ausbringleitung 26 eingeleitet. Der Lufteinleitraum 38 ist in dem zweiten Schaltzustand der Rückführeinrichtung 16a pneumatisch mit der Ausbringleitung 26 verbunden. Mittels der Druckluft DL wird die verhinderte Einleitung von Förderluft in die Ausbringleitung 26 kompensiert, sodass es nicht zu einer Beeinträchtigung des Materialtransports durch eine zu geringe Förderluftströmung kommt. Ein Verschleppen des Abschaltzeitpunkts wird somit effektiv vermieden.

Alternativ oder zusätzlich ist in einer nicht gezeigten Ausführungsform denkbar, dass sowohl Druckluft DL aus der Druckluftversorgungseinrichtung 40 als auch Förderluft-Material-Einzelströmung FME in die Ausbringleitung 26 einleitbar ist. Dies ist beispielsweise umsetzbar, indem der Sperrkörper 28 in eine Zwischenstellung zwischen erstem und zweitem Schaltzustand verbringbar ist. Ferner ist denkbar, dass die Druckluftversorgungseinrichtung 40 einen separaten Sperrkörper 28 zum wahlweisen Einleiten oder Absperren der Druckluft DL aufweist.

Bei dem Lufteinleitraum 38 handelt es sich um eine Luftkammer, welche sich in dem Gehäuse 20 der Rückführeinrichtung 16a befindet. Die Druckluft DL wird über den Lufteinleitraum 38 der Rückführeinrichtung 16a in die Ausbringleitung 26 eingeleitet. Die pneumatische Verbindung zwischen dem Lufteinleitraum 38 und der Ausbringleitung 26 wird also durch Schalten der Rückführeinrichtung 16a freigegeben. Die sich in dem Lufteinleitraum 38 befindende Druckluft DL kann somit in die Ausbringleitung 26 gelangen und das dort befindliche Material durch die Ausbringleitung 26 fördern. Bei Einleitung der Druckluft DL in die Ausbringleitung 26 stellt sich in der Ausbringleitung 26 eine Strömungsgeschwindigkeit ein, welche der Strömungsgeschwindigkeit der Förderluft-Material-Einzelströmung FME entspricht, wenn diese im ersten Schaltzustand in die Ausbringleitung 26 eingeleitet wird (vgl. Fig. 1). Somit ergibt sich unabhängig vom Schaltzustand der Rückführeinrichtung 16a in der Ausbringleitung 26 eine gleichbleibende Strömungsgeschwindigkeit, sodass das Abschaltverhalten vorhersehbar ist und entsprechend eingeregelt werden kann.

In dem zweiten Schaltzustand der Rückführeinrichtung 16a befindet sich der bewegliche Sperrkörper 28 in der Rückführstellung. In der Rückführstellung sperrt der erste Wippenarm 30a den Ausbringdurchgang 22.

Über die Druckluftversorgungseinrichtung 40 können in die verschiedenen Ausbringleitungen 26, welche sich an die Rührführeinrichtungen 16a-16e anschließen, auch unterschiedliche Druckluftmengen und/oder Druckluft DL mit einem unterschiedlichen Druck eingeleitet werden. Somit kann die Luftunterstützung segmentweise bzw. reihenweise zur Optimierung der Querverteilung eingestellt werden.

Im Übergang zwischen der Rückführleitung 36 und der Hauptförderleitung 12 kann eine Entlüftungsvorrichtung angeordnet sein, mit welcher überschüssige Luft aus dem System ausgeleitet werden kann. Auf diese Weise wird vermieden, dass der Materialtransport innerhalb der Hauptförderleitung 12 durch die zurückgeführte Luftmenge beeinträchtigt wird.

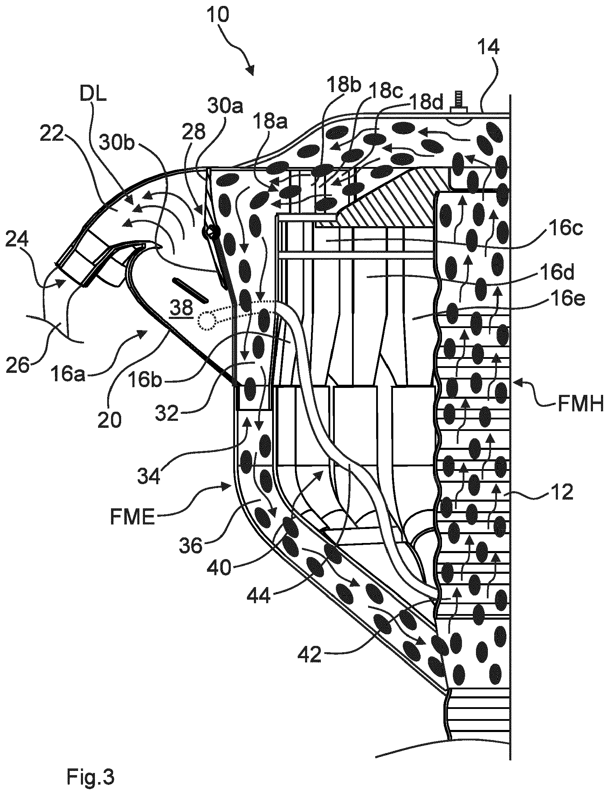

Die Fig. 3 zeigt eine Verteilvorrichtung 10 mit einem Strömungsabzweiger 46. Der Strömungsabzweiger 46 ist mit der Druckluftversorgungseinrichtung 40 verbunden und dazu eingerichtet, die Druckluft DL aus der Förderluft-Material-Hauptströmung FMH abzuzweigen. Der Strömungsabzweiger 46 ist in einem Bereich erhöhten Drucks an der Hauptförderleitung 12 angeordnet. Die Hauptförderleitung weist eine als Düse fungierende Leitungsverengung auf, wobei der Strömungsabzweiger 46 in Strömungsrichtung unmittelbar hinter der Leitungsverengung angeordnet ist. In diesem Fall ist keine Entlüftung notwendig, da keine zusätzliche Luft zugeführt wird, sondern Luft an geeigneter Stelle entzogen und zur Beschleunigung in den geschalteten Ausbringleitungen 26 verwendet werden kann. Der Strömungsabzweiger 46 ist über die Druckluftversorgungsleitung 44 mit dem Lufteinleitraum 38 in dem Gehäuse 20 der Rückführeinrichtung 16a verbunden.

In einer nicht gezeigten Ausführungsform ist der Strömungsabzweiger 46 in dem Verteilerkopf 14 angeordnet. Der Verteilerkopf 14 weist einen Deckel auf, der die Hauptförderleitung 12 nach oben begrenzt und von wo aus sich die Förderluft-Material-Hauptströmung FMH in alle Richtungen verteilt. Der Strömungsabzweiger 46 kann insbesondere an dem Deckel des Verteilerkopfes 14 angeordnet sein.

In einer weiteren nicht gezeigten Ausführungsform weist die erfindungsgemäße Verteilvorrichtung 10 ein luftdurchlässiges Element auf, welches mit der Druckluftversorgungseinrichtung 40 verbunden und dazu eingerichtet ist, die Druckluft DL aus der Förderluft-Material-Hauptströmung FMH und/oder zumindest einer Förderluft-Material-Einzelströmung FME abzuzweigen. Das luftdurchlässige Element ist so beschaffen, dass Luft durch es hindurchtreten kann während es in der Förderluft transportiertes Material zurückhält. Das luftdurchlässige Element kann beispielsweise siebartig ausgeführt sein. Alternativ oder zusätzlich kann das luftdurchlässige Element derart in der Förderluft-Material-Hauptströmung FMH und/oder einer Förderluft-Material-Einzelströmung FME angeordnet sein, dass in der Förderluft transportiertes Material, insbesondere aufgrund seiner kinetischen Energie, über das luftdurchlässige Element hinweg transportiert wird, während die Druckluft DL abgezweigt wird. Das luftdurchlässige Element kann mithin als Störkontur ausgeführt sein. Vorzugsweise ist das luftdurchlässige Element an einem Übergang zwischen dem Verteilerkopf 14 und einer Druckluftverteilkammer 42 angeordnet.

### Bezugszeichenliste

- 10: Verteilvorrichtung
- 12: Hauptförderleitung
- 14: Verteilerkopf
- 16a-16e: Rückführeinrichtungen
- 18a-18d: Einlassöffnungen
- 20: Gehäuse
- 22: Ausbringdurchgang
- 24: Ausbringöffnung
- 26: Ausbringleitung
- 28: Sperrkörper
- 30a, 30b: Wippenarme
- 32: Rückführdurchgang
- 34: Rückführöffnung
- 36: Rückführleitung
- 38: Lufteinleitraum
- 40: Druckluftversorgungseinrichtung
- 42: Druckluftverteilkammer
- 44: Druckluftversorgungsleitung
- 46: Strömungsabzweiger
- FMH: Förderluft-Material-Hauptströmung
- FME: Förderluft-Material-Einzelströmung
- DL: Druckluft

## Patentansprüche

1. Verteilvorrichtung (10) für körniges Material, insbesondere Saatgut und/oder Dünger, mit
- einem Verteilerkopf (14), welcher dazu eingerichtet ist, eine dem Verteilerkopf (14) über eine Hauptförderleitung (12) zugeleitete Förderluft-Material-Hauptströmung (FMH) in mehrere Förderluft-Material-Einzelströmungen (FME) aufzuteilen; und
- zumindest einer schaltbaren Rückführeinrichtung (16a-16e), welche dazu eingerichtet ist, in einem ersten Schaltzustand eine in die Rückführeinrichtung (16a-16e) einströmende Förderluft-Material-Einzelströmung (FME) in eine Ausbringleitung (26) einzuleiten und in einem zweiten Schaltzustand das körnige Material und zumindest einen Anteil der Förderluft einer in die Rückführeinrichtung (16a-16e) einströmenden Förderluft-Material-Einzelströmung (FME) in eine mit der Hauptförderleitung (12) verbundene Rückführleitung (36) einzuleiten;
**gekennzeichnet durch** eine Druckluftversorgungseinrichtung (40), mittels welcher, vorzugsweise im zweiten Schaltzustand der Rückführeinrichtung (16a-16e), Druckluft (DL) alternativ oder zusätzlich zu der Förderluft einer in die Rückführeinrichtung (16a-16e) einströmenden Förderluft-Material-Einzelströmung (FME) in die Ausbringleitung (26) einleitbar ist.

2. Verteilvorrichtung (10) nach Anspruch 1,
**dadurch gekennzeichnet, dass** die Rückführeinrichtung (16a-16e) ein Lufteinleitraum (38) aufweist, welcher, insbesondere in dem zweiten Schaltzustand, pneumatisch mit der Ausbringleitung (26) verbunden ist, wobei die Druckluftversorgungseinrichtung (40) an den Lufteinleitraum (38) der Rückführeinrichtung (16a-16e) angeschlossen ist.

3. Verteilvorrichtung (10) nach Anspruch 2,
**dadurch gekennzeichnet, dass** die pneumatische Verbindung zwischen dem Lufteinleitraum (38) und der Ausbringleitung (26) in dem ersten Schaltzustand der Rückführeinrichtung (16a-16e) gesperrt und/oder in dem zweiten Schaltzustand der Rückführeinrichtung (16a-16e) freigegeben ist.

4. Verteilvorrichtung (10) nach Anspruch 3,
**dadurch gekennzeichnet, dass** die Rückführeinrichtung (16a-16e) zumindest einen beweglichen Sperrkörper (28) aufweist, welcher durch Schalten der Rückführeinrichtung (16a-16e) in eine Ausbringstellung und eine Rückführstellung verbringbar ist, wobei sich der zumindest eine Sperrkörper (28) in dem ersten Schaltzustand der Rückführeinrichtung (16a-16e) in der Ausbringstellung und/oder in dem zweiten Schaltzustand der Rückführeinrichtung (16a-16e) in der Rührführstellung befindet.

5. Verteilvorrichtung (10) nach Anspruch 4,
**dadurch gekennzeichnet, dass** der Sperrkörper (28) dazu eingerichtet ist,
- in der Ausbringstellung die pneumatische Verbindung zwischen dem Lufteinleitraum (38) und der Ausbringleitung (26) zu sperren; und/oder
- in der Rückführstellung die pneumatische Verbindung zwischen dem Lufteinleitraum (38) und der Ausbringleitung (26) freizugeben.

6. Verteilvorrichtung (10) nach Anspruch 4 oder 5,
**dadurch gekennzeichnet, dass** die Rückführeinrichtung (16a-16e) einen Ausbringdurchgang (22) zwischen einer mit dem Verteilerkopf (14) verbundenen Einlassöffnung (18a-18d) der Rückführeinrichtung (16a-16e) und einer mit der Ausbringleitung (26) verbundenen Ausbringöffnung (24) der Rückführeinrichtung (16a-16e) aufweist und der zumindest eine Sperrkörper (28) dazu eingerichtet ist,
- in der Ausbringstellung den Ausbringdurchgang (22) freizugeben; und/oder
- in der Rückführstellung den Ausbringdurchgang (22) zu sperren.

7. Verteilvorrichtung (10) nach einem der Ansprüche 4 bis 6,
**dadurch gekennzeichnet, dass** die Rückführeinrichtung (16a-16e) einen Rückführdurchgang (32) zwischen einer mit dem Verteilerkopf (14) verbundenen Einlassöffnung (18a-18d) der Rückführeinrichtung (16a-16e) und einer mit der Rückführleitung (36) verbundenen Rückführöffnung (34) der Rückführeinrichtung (16a-16e) aufweist und der Sperrkörper (28) dazu eingerichtet ist,
- in der Ausbringstellung den Rückführdurchgang (32) zu sperren; und/oder
- in der Rückführstellung den Rückführdurchgang (32) freizugeben.

8. Verteilvorrichtung (10) nach einem der vorstehenden Ansprüche, **gekennzeichnet durch** mehrere schaltbare Rückführeinrichtungen (16a-16e), welche jeweils mit einer Ausbringleitung (26) und einer Rückführleitung (36) verbunden sind, wobei mittels der Druckluftversorgungseinrichtung (40), vorzugsweise im zweiten Schaltzustand der jeweiligen Rückführeinrichtungen (16a-16e), Druckluft (DL) alternativ oder zusätzlich zu der Förderluft der in die jeweiligen Rückführeinrichtungen (16a-16e) einströmenden Förderluft-Material-Einzelströmungen (FME) in die jeweiligen Ausbringleitungen (26) einleitbar ist.

9. Verteilvorrichtung (10) nach Anspruch 8,
**dadurch gekennzeichnet, dass** die Druckluftversorgungseinrichtung (40) dazu eingerichtet ist, in die verschiedenen Ausbringleitungen (26) unterschiedliche Druckluftmengen und/oder Druckluft (DL) mit einem unterschiedlichen Druck einzuleiten.

10. Verteilvorrichtung (10) nach Anspruch 8 oder 9,
**dadurch gekennzeichnet, dass** Lufteinleiträume mehrerer Rückführeinrichtungen (16a-16e) pneumatisch miteinander verbunden sind.

11. Verteilvorrichtung (10) nach einem der An sprüche 8 bis 10,
**dadurch gekennzeichnet, dass** die Druckluftversorgungseinrichtung (40) eine Druckluftverteilkammer (42) aufweist, an welche Lufteinleiträume mehrerer Rückführeinrichtungen (16a-16e) angeschlossen sind.

12. Verteilvorrichtung (10) nach einem der vorstehenden Ansprüche,
**gekennzeichnet durch** ein Gebläse zum Erzeugen einer Luftströmung, wobei das Gebläse mit einem Strömungsteiler verbunden ist, welcher mit der Hauptförderleitung (12) und der Druckluftversorgungseinrichtung (40) verbunden und dazu eingerichtet ist, die erzeugte Luftströmung in eine Förderluft-Strömung und eine Druckluft-Strömung aufzuteilen.

13. Verteilvorrichtung (10) nach einem der vorstehenden Ansprüche,
**gekennzeichnet durch** einen an der Hauptförderleitung (12) angeordneten Strömungsabzweiger (46), welcher mit der Druckluftversorgungseinrichtung (40) verbunden und dazu eingerichtet ist, die Druckluft (DL) aus der Förderluft-Material-Hauptströmung (FMH) abzuzweigen.

14. Verfahren zum Verteilen von körnigem Material, insbesondere Saatgut und/oder Dünger, mit einer Verteilvorrichtung (10), insbesondere einer Verteilvorrichtung (10) nach einem der vorstehenden Ansprüche, mit den Schritten:
- Aufteilen einer einem Verteilerkopf (14) der Verteilvorrichtung (10) über eine Hauptförderleitung (12) zugeleiteten Förderluft-Material-Hauptströmung (FMH) in mehrere Förderluft-Material-Einzelströmungen (FME); und
- Schalten einer schaltbaren Rückführeinrichtung (16a-16e) der Verteilvorrichtung (10) von einem ersten Schaltzustand, in welchem eine in Rückführeinrichtung (16a-16e) einströmende Förderluft-Material-Einzelströmung (FME) in eine Ausbringleitung (26) eingeleitet wird, in einen zweiten Schaltzustand, in welchem das körnige Material und zumindest ein Anteil der Förderluft einer in die Rückführeinrichtung (16a-16e) einströmenden Förderluft-Material-Einzelströmung (FME) in eine mit der Hauptförderleitung (12) verbundene Rückführleitung (36) eingeleitet wird;
**gekennzeichnet durch** den Schritt:
- Einleiten von Druckluft (DL) in die Ausbringleitung (26) alternativ oder zusätzlich zu der Förderluft einer in die Rückführeinrichtung (16a-16e) einströmenden Förderluft-Material-Einzelströmung (FME) mittels einer Druckluftversorgungseinrichtung (40), vorzugsweise während die Rückführeinrichtung (16a-16e) sich im zweiten Schaltzustand befindet.

15. Verfahren nach Anspruch 14,
**dadurch gekennzeichnet, dass** zum Einleiten der Druckluft (DL) in die Ausbringleitung (26) die Druckluft (DL) einem Lufteinleitraum (38) der Rückführeinrichtung (16a-16e) zugeleitet wird, welcher, insbesondere in dem zweiten Schaltzustand, pneumatisch mit der Ausbringleitung (26) verbunden ist.

16. Verfahren nach Anspruch 14 oder 15,
**gekennzeichnet durch** zumindest einen der folgenden Schritte:
- Sperren einer pneumatischen Verbindung zwischen dem Lufteinleitraum (38) und der Ausbringleitung (26) durch Schalten der Rückführeinrichtung (16a-16e) in den ersten Schaltzustand;
- Freigeben der pneumatischen Verbindung zwischen dem Lufteinleitraum (38) und der Ausbringleitung (26) durch Schalten der Rückführeinrichtung (16a-16e) in den zweiten Schaltzustand.

17. Verfahren nach Anspruch 16,
**dadurch gekennzeichnet, dass** das Sperren und/oder Freigeben durch Bewegen eines beweglichen Sperrkörpers (28) der Rückführeinrichtung (16a-16e) erfolgt, wobei der Sperrkörper (28) durch Schalten der Rückführeinrichtung (16a-16e) in den ersten Schaltzustand in eine Ausbringstellung und durch Schalten der Rückführeinrichtung (16a-16e) in den zweiten Schaltzustand in eine Rückführstellung bewegt wird.
